# EUROPEAN PATENT APPLICATION

(11) **EP 4 488 108 A1**
(43) Date of publication of application: **08.01.2025**
(21) Application number: 23184273.3
(22) Date of filing: 07.07.2023
(51) Int. Cl.: B60L 53/16

(54) **SYSTEM AND METHOD FOR HANDLING AUTHORIZATION TO UNLOCK A CHARGING INLET OF AT LEAST ONE VEHICLE**

(71) Applicant: VOLVO TRUCK CORPORATION, 405 08 Göteborg (SE)
(72) Inventor: SYLVÈN, Martin, 436 39 Askim (SE); BJÖRNEMARK, Niklas, 423 51 Torslanda (SE)
(74) Representative: Valea AB

(57) **Abstract**

The present disclosure relates to a computer system (103, 400) for handling authorization to unlock a charging inlet (108) of a vehicle (100), wherein the computer system (103, 400) comprises processing circuitry (402) configured to:
- obtain, from a requester (105), a request for authorization to unlock the charging inlet (108), wherein the request comprises an ID of the requester (105);
- determine, based on the ID of the requester (105), to deny or grant the request;
- when the request has been granted, provide instructions to the charging inlet (108) to authorize unlocking of the charging inlet (108); and to
- obtain, from the charging inlet (108), a confirmation that the unlocking has been authorized.

## Description

### TECHNICAL FIELD

The disclosure relates generally to a computer system, a vehicle, a computer-implemented method, a computer program product and a non-transitory computer-readable storage medium. In particular aspects, the disclosure relates to handling authorization to unlock a charging inlet (108) of at least one vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

For an at least partly electrically driven vehicle, the charge cord is locked to the vehicle during charging to avoid that charge cord is ejected and someone can get hurt and damage physical equipment during charging. It is also necessary to keep the charge cord locked to the charging inlet to avoid a person that is not authorized to remove the charge cord. If the charging cord is removed by an unauthorized person, the charging may be stopped before the vehicle is charged to the required State of Charge (SOC), and this may impact the vehicle's mission since it does not have the necessary SOC.

In some cases, the charge cord needs to be removed by someone that does not have physical access to the vehicle using keys or key-fob, or by someone that does not have full access to the vehicle, or by someone that only have access to the charging inlet and not the rest of the vehicle. For example, someone in the vehicle fleet needs to use the charger for vehicle B, but vehicle A is currently using the charger and the driver to vehicle B does not have the keys to vehicle A. Hence the charge cord cannot be unlocked and moved to vehicle B.

In view of the above, there is a strive to develop further improved technology relating to authorization to access a charging inlet of a vehicle.

### SUMMARY

According to a first aspect of the disclosure, a computer system for handling authorization to unlock a charging inlet of a vehicle is provided. The computer system comprises processing circuitry configured to:
- obtain, from a requester, a request for authorization to unlock the charging inlet, wherein the request comprises an identification (ID) of the requester;
- determine, based on the ID of the requester, to deny or grant the request for authorization to unlock the charging inlet;
- when the request has been granted, provide instructions to the charging inlet to authorize unlocking of the charging inlet; and
- obtain, from the charging inlet, a confirmation that the unlocking has been authorized.

The first aspect of the disclosure may seek to improve handling of authorization to unlock a charging inlet of a vehicle. A technical benefit may include that handling of authorization to unlock a charging inlet of a vehicle is improved.

Optionally in some examples, including in at least one preferred example, the processing circuitry is further configured to, when the confirmation has been obtained, provide, to the requester, information indicating that the request for authorization to unlock the charging inlet has been granted and that charging inlet is ready to be unlocked. A technical benefit may include that a user may manually unlock the charging inlet, e.g. by activating an unlock button next to the charging inlet. Thus, the charging inlet may be unlocked only when the user determines that it is convenient and suitable to do so.

Optionally in some examples, including in at least one preferred example, the confirmation comprises information that the unlocking has been performed. A technical benefit may include that the charging inlet may be automatically unlocked when the instructions have been provided to it, i.e. it may be an automated process. It may not be necessary for a user to manually unlock the charging inlet.

Optionally in some examples, including in at least one preferred example, the instructions provided to the charging inlet may comprise information indicating that the requester is authorized to unlock the charging inlet. A technical benefit may include that the charging inlet may allow the requester to unlock the charging inlet without performing additional authorization procedures. Since the requester is authorized, no unauthorized unlocking may be performed.

Optionally in some examples, including in at least one preferred example, the request for authorization may be determined to be granted when the ID of the requester is amongst predetermined authorized IDs. The request for authorization may be determined to be denied when the ID of the requester is not amongst predetermined authorized IDs.

A technical benefit may include that comparing the ID of the requester with predetermined authorized IDs is an easy and fast way of granting or denying the request for authorization. Furthermore, the predetermined authorized IDs may be dynamically updated such that IDs may be changed, added and removed when necessary, such that it is always up to date. The predetermined authorized ID's may be centrally administered, i.e. there is no need for making change at multiple locations causing a risk for different versions of the information, and thereby increasing the risk for unauthorized access to the charging inlet.

Optionally in some examples, including in at least one preferred example, the request for authorization may be determined to be granted or denied based on user input indicating grant or denial of the request.

In addition to or instead of using user input as a basis for the decision, the decision may be taken without user input, i.e. the decision may be taken by the processing circuitry alone.

A technical benefit may include that grant or denial of the request may be performed manually, for example by a fleet manager or other authorized personnel providing the user input and that is authorized to grant or deny such request. The requester of the authorization to unlock may easily contact the fleet manager which may directly grant or deny the request. A technical benefit of the decision being taken without user input may include that it may be an automated process where no manual involvement, e.g. approval, by a user is necessary.

Optionally in some examples, including in at least one preferred example, the vehicle may be accessible by the computer system or a user of the computer system. The vehicle may be inaccessible to the requester.

A technical benefit may include that even though the vehicle is inaccessible to the requester, he or she may still be able to unlock the charging inlet by providing a request for authorization to unlock the charging inlet.

Optionally in some examples, including in at least one preferred example, the instructions to the charging inlet to authorize unlocking of the charging inlet may comprise activation instructions for activating an actuator of the charging inlet.

A technical benefit may include that the charging inlet automatically unlocks when the actuator is activated. This is a fast and easy way of unlocking the charging inlet.

Optionally in some examples, including in at least one preferred example, the request for authorization to unlock the charging inlet may be for one vehicle or for a fleet of vehicles comprising multiple vehicles.

A technical benefit may include that one request may be valid for multiple vehicles. As a result, it may not be necessary to send one request for each vehicle where the requester wants to unlock the charging inlet. This saves time and bandwidth, as only one request needs to be transmitted.

Optionally in some examples, including in at least one preferred example, the computer system may be remotely located from the vehicle and the requester.

A technical benefit may include that it is not necessary for the computer system to be located at the same location as the vehicle and the requester. Thus, the requester may be at any location with respect to the computer system, and still be able to request authorization to unlock the charging inlet. This is a flexible and user-friendly solution.

According to a second aspect of the disclosure, a vehicle is provided. The vehicle comprises a computer system of the first aspect and a charging inlet.

The second aspect of the disclosure may seek to improve handling of authorization to unlock a charging inlet of a vehicle.

Technical benefits of the second aspect of the disclosure are largely analogous to the technical benefits of the first aspect of the disclosure. It shall also be noted that all examples of the first aspect of the disclosure are applicable to and combinable with all examples of the second aspect of the disclosure, and vice versa.

According to a third aspect of the disclosure, a computer-implemented method for handling authorization to unlock a charging inlet of a vehicle is provided. The method comprises:
- obtaining, by processing circuitry of a computer system and from a requester, a request for authorization to unlock the charging inlet, wherein the request comprises an ID of the requester;
- determining, by the processing circuitry, based on the ID of the requester, to deny or grant the request for authorization to unlock the charging inlet;
- when the request has been granted, providing, by the processing circuitry, instructions to the charging inlet to authorize unlocking of the charging inlet; and
- obtaining, by the processing circuitry and from the charging inlet, a confirmation that the unlocking has been authorized.

The third aspect of the disclosure may seek to improve handling of authorization to unlock a charging inlet of a vehicle

Optionally in some examples, including in at least one preferred example, when the confirmation has been obtained, providing, by the processing circuitry and to the requester, information indicating that the request for authorization to unlock the charging inlet has been granted and that charging inlet is ready to be unlocked.

Optionally in some examples, including in at least one preferred example, the confirmation comprises information that the unlocking has been performed.

Optionally in some examples, including in at least one preferred example, the instructions provided to the charging inlet may comprise information indicating that the requester is authorized to unlock the charging inlet.

Optionally in some examples, including in at least one preferred example, the request for authorization is determined to be granted when the ID of the requester is amongst predetermined authorized IDs. The request for authorization may be determined to be denied when the ID of the requester is not amongst predetermined authorized IDs.

Optionally in some examples, including in at least one preferred example, the request for authorization may be determined to be granted or denied based on user input indicating grant or denial of the request.

Optionally in some examples, including in at least one preferred example, the instructions to the charging inlet to authorize unlocking of the charging inlet may comprise activation instructions for activating an actuator of the charging inlet.

Optionally in some examples, including in at least one preferred example, the vehicle may be accessible by the computer system or a user of the computer system.

Optionally in some examples, including in at least one preferred example, the request for authorization to unlock the charging inlet may be for one vehicle or for a fleet of vehicles comprising multiple vehicles.

Optionally in some examples, including in at least one preferred example, the computer system may be remotely located from the vehicle and the requester.

Technical benefits of the third aspect of the disclosure are largely analogous to the technical benefits of the first aspect and the second aspect of the disclosure. It shall also be noted that all examples of the first aspect and the second of the disclosure are applicable to and combinable with all examples of the third aspect of the disclosure, and vice versa.

According to a fourth aspect of the disclosure, a computer program product is provided. The computer program product comprises program code for performing, when executed by a processing circuitry, the method of the third aspect.

The fourth aspect of the disclosure may seek to improve handling of authorization to unlock a charging inlet of a vehicle.

Technical benefits of the fourth aspect of the disclosure are largely analogous to the technical benefits of the first aspect, the second aspect and the third aspect of the disclosure. It shall also be noted that all examples of the first aspect, the second aspect and the third aspect of the disclosure are applicable to and combinable with all examples of the fourth aspect of the disclosure, and vice versa.

According to a fifth aspect of the disclosure, a non-transitory computer-readable storage medium is provided. The non-transitory computer-readable storage medium comprises instructions, which when executed by a processing circuitry, cause the processing circuitry to perform the method of the third aspect.

The fifth aspect of the disclosure may seek to improve handling of authorization to unlock a charging inlet of a vehicle.

Technical benefits of the fifth aspect of the disclosure are largely analogous to the technical benefits of the first aspect, the second aspect, the third aspect and the fourth aspect of the disclosure. It shall also be noted that all examples of the first aspect, the second aspect, the third aspect and the fourth aspect of the disclosure are applicable to and combinable with all examples of the fifth aspect of the disclosure, and vice versa.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle according to an example.
**FIG. 2** is an exemplary signaling diagram illustrating a method according to an example.
**FIG. 3** is an exemplary flow chart illustrating a method according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

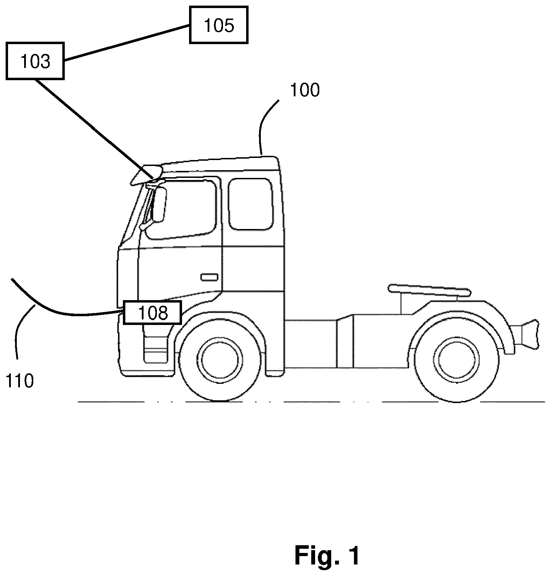

**FIG. 1** is an exemplary drawing illustrating a vehicle **100** according to an example. The vehicle **100** may be a heavy-duty vehicle, such as truck, bus, marine vessel or construction equipment, among other vehicle types. Although the disclosure may be described with respect to a particular vehicle, the disclosure is not restricted to any particular vehicle.

The vehicle **100** comprises a chargeable energy source used to drive the vehicle **100.** The vehicle **100** may be at least partly electrically driven, for example by means of a battery, a fuel cell or any other suitable chargeable energy source.

The vehicle **100** comprises a charge inlet **108** arranged to receive a charge cord **110.** In other words, the charge cord **110** is arranged to be connected to the charge inlet **108** when the vehicle **100** is to be charged. The charge inlet **108** may be referred to as a charge cord inlet, a charge connector, a charge cord connector etc. The charge cord **110** may be referred to as a charge cable.

The vehicle **100** may or may not be comprised in a vehicle fleet. The vehicle fleet comprises multiple vehicles **100.** The vehicles comprised in the vehicle fleet may be at least partly controlled by a fleet manager system, and the fleet manager system may be an autonomous system, or it may be at least partly manually operated by a fleet manager.

**FIG. 1** shows a computer system **103, 400.** The computer system **103, 400** may be arranged to be connected to the vehicle **100** or it may be at least partly comprised in the vehicle **100.** For example, the vehicle **100** may comprise the whole computer system **103, 400.** In another example, the vehicle 100 may comprise a first part of the computer system **103, 400** and a second part of the computer system **103, 400** may be located off-board the vehicle **100,** for example in a remote location. In another example, the whole computer system **103, 400** may be located off-board the vehicle **100,** but still arranged to be connected to the vehicle **100.** The vehicle **100** may comprise an actuator configured to unlock the charging inlet **108.**

The computer system **103, 400** may be remotely located from the vehicle **100** or it may be at least partly comprised in the vehicle **100.**

The computer system **103, 400** is arranged to be operated by the fleet manager.

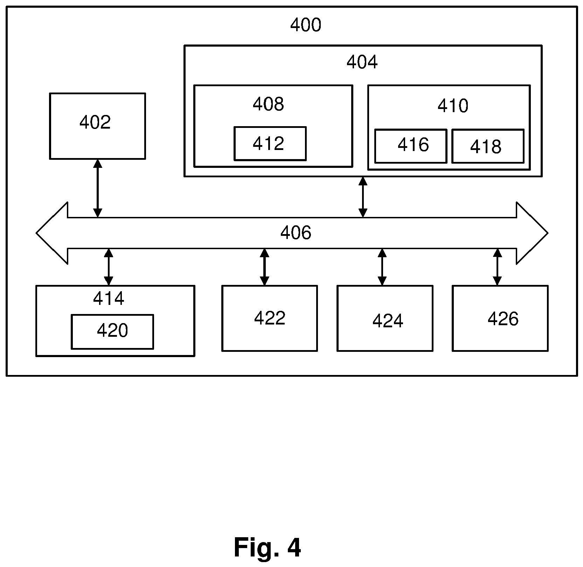

The reference number 400 will be described later together with **FIG. 4****.** The computer system **103, 400** may be referred to as a fleet manager system, a system operated by a fleet manager or similar.

**FIG. 1** shows a requester **105.** The requester **105** may be a UE or the requester **105** may be comprised in a UE arranged to be used by a user, and the user may also be a user of the vehicle **100.** The UE may be a mobile phone, a tablet computer, a stationary computer, just to mention some examples. The requester **105** is arranged to communicate with the computer system **103, 400** and/or the vehicle **100.**

The present disclosure relates to a fleet management tool comprised in a computer system **103, 400** that offers the possibility to remotely authorize unlock the charging inlet **108** for one particular vehicle **100** or for all vehicles **100** in the fleet. The fleet manager having access to the computer system **103, 400** may also reach other fleets as long as he/she has access to them.

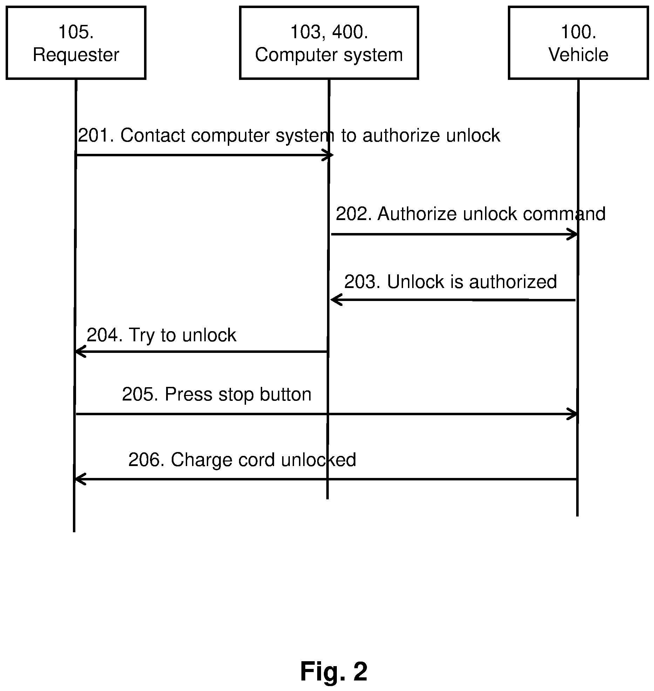

**FIG. 2** is an exemplary signaling diagram illustrating a method according to an example. The method comprises at least one of the following steps, which steps may be performed in any suitable order than described below. At start of the method, the charge cord **110** is connected to the charge inlet **108,** and the charge inlet **108** is locked, i.e. it is in a locked state, such that the charge cord **110** cannot be removed from the charge inlet **108.**

Step **201:** A user of the vehicle **100,** e.g. a driver, an operator, a technician, or any other suitable person, contacts a fleet manager to indicate that he or she wants authorization to unlock the charging inlet **108,** and thereby be able to remove the charge cord **100** from the charging inlet **108.** The user may contact the fleet manager by sending a request via a User Equipment (UE) to the computer system **103, 400.** The computer system **103, 400** is arranged to be operated by the fleet manager. Using other words, the computer system **103, 400** obtains a request for authorization to unlock the charging inlet 108. The request comprises an ID of the requester **105.** The requester **105** may be the user. The requester **105** may be or may be comprised in a UE arranged to be used by the user. The UE may be a mobile phone, a tablet computer, a stationary computer, just to mention some examples.

Step **202:** The computer system **103, 400** determines, based on the ID of the requester **105,** to deny or grant the request for authorization to unlock the charging inlet 108. This may be performed for example by that the fleet manager logs in to the fleet management tool comprised in the computer system **103, 400** through which the vehicles in a vehicle fleet may be accessed, i.e. the request for authorization may be granted or denied.

When the request has been granted, the computer system **103, 400** provides instructions to the charging inlet **108** to authorize unlocking of the charging inlet. Using other words, the fleet manager sends, via the computer system **103, 400,** a command to the vehicle **100** to authorize charge inlet unlock. The command may be sent to the charging inlet **108** comprised in the vehicle **100.** The instructions may also comprise instructions to the charging inlet **108** to automatically unlock the charging inlet **108.** The vehicle **100,** e.g. the charging inlet **108,** consequently authorizes the unlock.

When the vehicle **100,** e.g. the charging inlet **108,** has authorized the unlock, the charging inlet **108** may automatically unlock itself. Thus, the user does not have to do a manual action to unlock the charging inlet **108,** i.e. he/she does not have to manually press an unlock button or similar. The charging inlet **108** may perform the unlocking as a default action upon authorizing the unlocking, or it may perform the unlocking after receiving instructions to do so. The unlocking may be performed by an actuator comprised in or connected to the charging inlet **108** activating the unlocking.

When the computer system **103,** 400 has granted the request for authorization to unlock the charging inlet **108,** information about the grant and the associated requester **105** may be stored in any suitable storage medium, e.g. a local memory in the computer system **103, 400,** a cloud memory accessible by the computer system **103, 400,** just to mention some examples. When the information about the grant and the associated requester **105** is stored, it is possible to track who has been granted authorization. For example, if the charging cable is not connected to the charging inlet **108** as it should be, the stored information may be used to track which requester **105** that was latest authorized to access the charging inlet **108,** and this requester **105** may be contacted in order to request information about the not connected charging cable.

Step **203:** The vehicle **100,** e.g. the charging inlet **108,** provides a confirmation of that the unlocking has been authorized. If the vehicle **100,** e.g. the charging inlet **108,** was automatically unlocked in step **202,** then the confirmation may comprise information indicating that the charging inlet **108** has been unlocked. Thus, step **203** may comprise both information about the authorization and the actual unlocking.

Step **204:** The computer system **103, 400** may provide instructions to the user, e.g. via his or her UE, that the charging inlet **108** can be unlocked. For example, a message may be displayed on a display comprised in or connected to the UE that indicates that the charging inlet **108** is ready to be unlocked. Another example may be that a voice message may indicate that the charging inlet **108** is ready to be unlocked. Step **204** may not necessarily be performed if an automatic unlocking was performed in step **202,** as described above.

Step **205:** The user may activate a charge stop button or an unlock button, for example by pressing a button, activates the button via a voice command or using any other suitable activation means. Consequently, an actuator comprised in the vehicle **100** may activate unlocking of the charging inlet **108.** Activating a charge stop button or an unlock button is only an example, and any other action for activating unlocking the charging inlet **108** may be performed. For example, the user may activate unlocking of the charging inlet **108** by entering unlocking instructions in his/her UE.

Step **206:** As a result of step **205,** the charging inlet **108** is unlocked and the charge cord **110** may be disconnected from the charging inlet **108.**

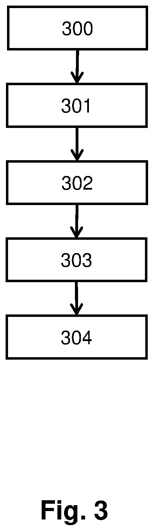

**FIG. 3** is an exemplary flow chart illustrating a method according to an example. In more detail, **FIG. 3** is an exemplary flow chart illustrating a computer-implemented method for handling authorization to unlock a charging inlet **108** of a vehicle **100.** The computer-implemented method may be performed by a processing circuitry **402** of the first computer system **103, 400.** The computer system **103, 400** may be arranged to be connected to the vehicle **100** or it may be at least partly comprised in the vehicle **100.** The vehicle **100** may be accessible by the computer system **103, 400** or a user of the computer system **103, 400.** The computer system **103, 400** may be remotely located from the vehicle **100** and the requester 105. The method comprises at least one of the following steps, which steps may be performed in any suitable order than described below:

Step **300:** This step corresponds to step **201** in **FIG. 2****.** The processing circuitry **402** of the computer system **103, 400** obtains, from a requester **105,** a request for authorization to unlock the charging inlet **108.** The request comprises an ID of the requester 105. The requester **105** may be a UE arranged to be used by a user of the vehicle **100** and/or the vehicle fleet.

The request for authorization to unlock the charging inlet **108** may be for one vehicle **100** or for a fleet of vehicles comprising multiple vehicles **100.**

Step **301:** This step corresponds to step **201** in **FIG. 2****.** The processing circuitry **402** determines, based on the ID of the requester **105,** to deny or grant the request for authorization to unlock the charging inlet **108.**

The request for authorization may be determined to be granted when the ID of the requester **105** is amongst predetermined authorized IDs. The request for authorization may be determined to be denied when the ID of the requester **105** is not amongst predetermined authorized IDs. The processing circuitry **402** may compare the ID of the requester **105** with the predetermined authorized IDs, and the request for authorization may be granted if there is a match between the ID of the requester **105** and the predetermined authorized IDs.

The request for authorization may be determined to be granted or denied based on user input indicating grant or denial of the request.

Step **302:** This step corresponds to step **202** in **FIG. 2****.** When the request has been granted, the processing circuitry **402** provides instructions to the charging inlet **108** to authorize unlocking of the charging inlet **108.**

Instead of providing instructions to authorize unlocking or in addition to providing instructions to authorize unlocking, the processing circuitry **402** may provide instructions to the charging inlet **108** to automatically unlock itself. Thus, it may not be necessary to first provide instructions to authorize unlocking and then provide instructions to unlock, but instructions to unlock may be provided directly from the processing circuitry **402** to the charging inlet **108** without informing about the authorization first.

The instructions provided to the charging inlet **108** may comprise information indicating that the requester **105** is authorized to unlock the charging inlet **108.**

The instructions to the charging inlet **108** to authorize unlocking of the charging inlet **108** comprises activation instructions for activating an actuator of the charging inlet **108.**

When the vehicle **100,** e.g. the charging inlet **108,** has authorized the unlock, the charging inlet **108** may automatically unlock itself. Thus, the user does not have to do a manual action to unlock the charging inlet **108,** i.e. he/she does not have to manually press an unlock button or similar. The charging inlet **108** may perform the unlocking as a default action upon authorizing the unlocking, or it may perform the unlocking after receiving instructions to do so. The unlocking may be performed by an actuator comprised in or connected to the charging inlet **108** activating the unlocking.

Step **303:** This step corresponds to step **203** in **FIG. 2****.** The processing circuitry **402** obtains, from the charging inlet **108,** a confirmation that the unlocking has been authorized. The confirmation may comprise information that the unlocking has been performed.

If the vehicle **100,** e.g. the charging inlet **108,** was automatically unlocked in step **202,** then the confirmation may comprise information indicating that the charging inlet **108** has been unlocked. Thus, step **303** may comprise both information about the authorization and the actual unlocking.

Step **304:** This step corresponds to step **204** in **FIG. 2****.** When the confirmation has been obtained, the processing circuitry **402** provides, to the requester **105,** information indicating that the request for authorization to unlock the charging inlet **108** has been granted and that charging inlet **108** is ready to be unlocked. Consequently, the requester **105** may unlock the charging inlet **108.**

A computer program product comprises program code for performing, when executed by a processing circuitry **402,** the method described herein.

A non-transitory computer-readable storage medium comprises instructions, which when executed by a processing circuitry **402,** cause the processing circuitry **402** to perform the method described herein.

The present disclosure relates to a computer system **103, 400** handling authorization to unlock a charging inlet **108** of a vehicle **100.** The computer system **103, 400** is arranged to perform at least one step of the method of **FIG. 2** and/or **FIG. 3****.**

The computer system **103, 400** comprises a processing circuitry **402** configured to:
- obtain, from a requester **105,** a request for authorization to unlock the charging inlet **108,** wherein the request comprises an ID of the requester **105;**
- determine, based on the ID of the requester **105,** to deny or grant the request for authorization to unlock the charging inlet **108;**
- when the request has been granted, provide instructions to the charging inlet **108** to authorize unlocking of the charging inlet **108;** and to
- obtain, from the charging inlet **108,** a confirmation that the unlocking has been authorized.

The processing circuitry may be further configured to, when the confirmation has been obtained, provide, to the requester **105,** information indicating that the request for authorization to unlock the charging inlet **108** has been granted and that charging inlet **108** is ready to be unlocked.

The confirmation may comprise information that the unlocking has been performed.

The instructions provided to the charging inlet **108** may comprise information indicating that the requester **105** is authorized to unlock the charging inlet **108.**

The request for authorization may be determined to be granted when the ID of the requester **105** is amongst predetermined authorized IDs. The request for authorization may be determined to be denied when the ID of the requester **105** is not amongst predetermined authorized IDs.

The request for authorization may be determined to be granted or denied based on user input indicating grant or denial of the request.

The instructions to the charging inlet **108** to authorize unlocking of the charging inlet **108** may comprise activation instructions for activating an actuator of the charging inlet **108.**

The request for authorization to unlock the charging inlet **108** is for one vehicle **100** or for a fleet of vehicles **100** comprising multiple vehicles **100.**

The vehicle **100** may be accessible by the computer system **103, 400** or a user of the computer system **103, 400,** and the vehicle **100** may be inaccessible to the requester **105.**

The computer system **103, 400** may be remotely located from the vehicle **100** and the requester **105.**

The vehicle **100** comprises at least a part of a computer system **103, 400** described herein and a charging inlet **108.** For example, the vehicle **100** may comprise the whole computer system **103, 400.** In another example, the vehicle **100** comprises a first part of the computer system **103, 400** and a second part of the computer system **103, 400** is located off-board the vehicle **100,** for example in a remote location. In another example, the whole computer system **103, 400** is located off-board the vehicle **100,** but still arranged to be connected to the vehicle **100.** The vehicle **100** may comprise an actuator configured to unlock the charging inlet **108.**

**FIG. 4** is a schematic diagram of a computer system **103, 400** for implementing examples disclosed herein. The computer system **103, 400** is adapted to execute instructions from a computer-readable medium to perform these and/or any of the functions or processing described herein. The computer system **103, 400** may be connected (e.g., networked) to other machines in a LAN, an intranet, an extranet, or the Internet. While only a single device is illustrated, the computer system **103, 400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **103, 400** may comprise at least one computing device or electronic device capable of including firmware, hardware, and/or executing software instructions to implement the functionality described herein. The computer system **103, 400** may include processing circuitry **402** (e.g., processing circuitry including one or more processor devices or control units), a memory **404,** and a system bus **406.** The computer system **103, 400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **103, 400.**

The computer system **103, 400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **103, 400** that is to implement the functionality described herein.

The computer system **103, 400** may include an input device interface **422** configured to receive input and selections to be communicated to the computer system **103, 400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **103, 400** may include an output device interface **424** configured to forward output, such as to a display, a video display unit (e.g., a liquid crystal display (LCD) or a cathode ray tube (CRT)). The computer system **103, 400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.
Example 1: A computer system **103, 400** for handling authorization to unlock a charging inlet **108** of a vehicle **100,** wherein the computer system **103, 400** comprises processing circuitry **402** configured to:
   - obtain, from a requester **105,** a request for authorization to unlock the charging inlet **108,** wherein the request comprises an ID of the requester **105;**
   - determine, based on the ID of the requester **105,** to deny or grant the request for authorization to unlock the charging inlet **108;**
   - when the request has been granted, provide instructions to the charging inlet **108** to authorize unlocking of the charging inlet **108;** and to
   - obtain, from the charging inlet **108,** a confirmation that the unlocking has been authorized.
Example 2: The computer system **103, 400** of example 1, wherein the processing circuitry **402** is further configured to:
   - when the confirmation has been obtained, provide, to the requester **105,** information indicating that the request for authorization to unlock the charging inlet **108** has been granted and that charging inlet **108** is ready to be unlocked.
Example 3: The computer system **103, 400** of any of the preceding examples, wherein the confirmation comprises information that the unlocking has been performed.
Example 4: The computer system **103, 400** of any of the preceding examples, wherein the instructions provided to the charging inlet **108** comprises information indicating that the requester **105** is authorized to unlock the charging inlet **108.**
Example 5: The computer system **103, 400** of any of the preceding examples, wherein the request for authorization is determined to be granted when the ID of the requester **105** is amongst predetermined authorized IDs, and wherein the request for authorization is determined to be denied when the ID of the requester **105** is not amongst predetermined authorized IDs.
Example 6: The computer system **103, 400** of any of the preceding examples, wherein the request for authorization is determined to be granted or denied based on user input indicating grant or denial of the request.
Example 7: The computer system **103, 400** of any of the preceding examples, wherein the vehicle **100** is accessible by the computer system **103, 400** or a user of the computer system **103, 400,** and wherein the vehicle **103, 400** is inaccessible to the requester 105.
Example 8: The computer system **103, 400** of any of the preceding examples, wherein the instructions to the charging inlet **108** to authorize unlocking of the charging inlet **108** comprises activation instructions for activating an actuator of the charging inlet example.
Example 9: The computer system **103, 400** of any of the preceding examples, wherein the request for authorization to unlock the charging inlet **108** is for one vehicle **100** or for a fleet of vehicles **100** comprising multiple vehicles **100.**
Example 10: The computer system **103, 400** of any of the preceding examples, wherein the computer system **103, 400** is remotely located from the vehicle **100** and the requester 105.
Example 11: A vehicle **100** comprising at least part of a computer system **103, 400** of any of examples 1-10 and a charging inlet **108.**
Example 12: The vehicle **100** of example 11, further comprising an actuator configured to unlock the charging inlet **108.**
Example 13: A computer-implemented method for handling authorization to unlock a charging inlet **108** of a vehicle **100,** the method comprising:
   - obtaining **201, 300,** by processing circuitry **402** of a computer system **103, 400** and from a requester **105,** a request for authorization to unlock the charging inlet **108,** wherein the request comprises an ID of the requester **105;**
   - determining **201, 301,** by the processing circuitry **402,** based on the ID of the requester **105,** to deny or grant the request for authorization to unlock the charging inlet **108;**
   - when the request has been granted, providing **202, 302,** by the processing circuitry **402,** instructions to the charging inlet **108** to authorize unlocking of the charging inlet **108;** and
   - obtaining **203, 303,** by the processing circuitry **402** and from the charging inlet **108,** a confirmation that the unlocking has been authorized.
Example 14: The method of example 13, further comprising:
   - when the confirmation has been obtained, providing **204, 304,** by the processing circuitry **402** and to the requester **105,** information indicating that the request for authorization to unlock the charging inlet **108** has been granted and that charging inlet **108** is ready to be unlocked.
Example 15: The method of any of examples 13-14, wherein the confirmation comprises information that the unlocking has been performed.
Example 16: The method of any of examples 13-15, wherein the instructions provided to the charging inlet **108** comprises information indicating that the requester **105** is authorized to unlock the charging inlet **108.**
Example 17: The method of example 16, wherein the request for authorization is determined to be granted when the ID of the requester **105** is amongst predetermined authorized IDs, and wherein the request for authorization is determined to be denied when the ID of the requester **105** is not amongst predetermined authorized IDs.
Example 18: The method of any of examples 13-17, wherein the request for authorization is determined to be granted or denied based on user input indicating grant or denial of the request.
Example 19: The method of any of examples 13-18, wherein the instructions to the charging inlet **108** to authorize unlocking of the charging inlet **108** comprises activation instructions for activating an actuator of the charging inlet **108.**
Example 20: The method of any of examples 13-19, wherein the vehicle **100** is accessible by the computer system **103, 400** or a user of the computer system **103, 400.**
Example 21: The method of any of examples 13-20, wherein the request for authorization to unlock the charging inlet **108** is for one vehicle **100** or for a fleet of vehicles **100** comprising multiple vehicles **100.**
Example 22: The method of any of examples 13-21, wherein the computer system **103, 400** is remotely located from the vehicle **100** and the requester **105.**
Example 23: A computer program product comprising program code for performing, when executed by a processing circuitry **402,** the method of any of examples 13-22.
Example 24: A non-transitory computer-readable storage medium comprising instructions, which when executed by a processing circuitry **402,** cause the processing circuitry **402** to perform the method of any of examples 13-22.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (103, 400) for handling authorization to unlock a charging inlet (108) of a vehicle (100), wherein the computer system (103, 400) comprises processing circuitry (402) configured to:
obtain, from a requester (105), a request for authorization to unlock the charging inlet (108), wherein the request comprises an identification, ID, of the requester (105);
determine, based on the ID of the requester (105), to deny or grant the request for authorization to unlock the charging inlet (108);
when the request has been granted, provide instructions to the charging inlet (108) to authorize unlocking of the charging inlet (108); and to
obtain, from the charging inlet (108), a confirmation that the unlocking has been authorized.

2. The computer system (103, 400) of claim 1, wherein the processing circuitry (402) is further configured to:
when the confirmation has been obtained, provide, to the requester (105), information indicating that the request for authorization to unlock the charging inlet (108) has been granted and that charging inlet (108) is ready to be unlocked.

3. The computer system (103, 400) of any of the preceding claims, wherein the confirmation comprises information that the unlocking has been performed.

4. The computer system (103, 400) of any of the preceding claims, wherein the instructions provided to the charging inlet (108) comprises information indicating that the requester (105) is authorized to unlock the charging inlet (108).

5. The computer system (103, 400) of any of the preceding claims, wherein the request for authorization is determined to be granted when the ID of the requester (105) is amongst predetermined authorized IDs; and
wherein the request for authorization is determined to be denied when the ID of the requester (105) is not amongst predetermined authorized IDs.

6. The computer system (103, 400) of any of the preceding claims, wherein the request for authorization is determined to be granted or denied based on user input indicating grant or denial of the request.

7. The computer system (103, 400) of any of the preceding claims, wherein the vehicle (100) is accessible by the computer system (103, 400) or a user of the computer system (103, 400), and wherein the vehicle (100) is inaccessible to the requester (105).

8. The computer system (103, 400) of any of the preceding claims, wherein the instructions to the charging inlet (108) to authorize unlocking of the charging inlet (108) comprises activation instructions for activating an actuator of the charging inlet (108).

9. The computer system (103, 400) of any of the preceding claims, wherein the request for authorization to unlock the charging inlet (108) is for one vehicle or for a fleet of vehicles comprising multiple vehicles (100).

10. The computer system (103, 400) of any of the preceding claims, wherein the computer system (103, 400) is remotely located from the vehicle (100) and the requester (105).

11. A vehicle (100) comprising at least part of a computer system (103, 400) of any of claims 1-10 and a charging inlet (108).

12. The vehicle (100) of claim 11, further comprising:
an actuator configured to unlock the charging inlet (108).

13. A computer-implemented method for handling authorization to unlock a charging inlet (108) of a vehicle (100), the method comprising:
*obtaining* (201, 300), by processing circuitry (402) of a computer system (103, 400) and from a requester (105), a request for authorization to unlock the charging inlet (108), wherein the request comprises an identification, ID, of the requester (105);
*determining* (201, 301), by the processing circuitry (402), based on the ID of the requester (105), to deny or grant the request for authorization to unlock the charging inlet (108);
when the request has been granted, *providing* (202, 302), by the processing circuitry (402), instructions to the charging inlet (108) to authorize unlocking of the charging inlet (108); and
*obtaining* (203, 303), by the processing circuitry (402) and from the charging inlet (108), a confirmation that the unlocking has been authorized.

14. A computer program product comprising program code for performing, when executed by a processing circuitry (402), the method of claim 13.

15. A non-transitory computer-readable storage medium comprising instructions, which when executed by a processing circuitry (402), cause the processing circuitry (402) to perform the method of claim 13.
